# EUROPEAN PATENT APPLICATION

(11) **EP 1 206 959 A1**
(43) Date of publication of application: **22.05.2002**
(21) Application number: 99944646.1
(22) Date of filing: 27.08.1999
(51) Int. Cl.: B01D 53/22, B01D 67/00, B01D 71/68, B01D 69/08

(54) **POLYMER MEMBRANE FOR THE SEPARATION OF GAS MIXTURE**

(30) Priority: 22.07.1999 ES 9901652
(71) Applicant: David Systems Technology S.L., 28006 Madrid (ES)
(72) Inventor: BLACH VIZOSO, Ricardo, E-48950 Asua-Erandio (ES)
(74) Representative: Carpintero Lopez, Francisco
(86) International application number: ES9900279
(87) International publication number: WO0107148

(57) **Abstract**

This membrane comprises asymmetric hollow fibre of poiyethersulphide for the purpose of pervaporation, treated with mixtures of liquids (C2H50H+X) in which X=toluene, acetone, dimethylformamide with a content of between 7 - 12% by volume of the mixture, subsequently treated with a solution at 2.5% by volume of urethanosiloxane in isopropylic alcohol.

## Description

### OBJECT OF THE INVENTION

The invention is destined to the technology of membranes for separating mixtures of gases and can be applied to a chemical product, oil refineries, the natural gas industry, as well as other branches of the petrochemical industry, and it can be used for the separation of technological gaseous mixtures, including hydrogen and/or components of natural gas with a broad content of hydrogen sulphide and heavy hydrocarbons.

### BACKGROUND OF THE INVENTION

Currently, progress in the technologies of chemical products is connected to the new technologies for saving energy. One of these prospective procedures is the separation of mixtures of gases using membranes.

The procedures using membranes are attractive for technicians because of their low behavioural waste in the field, the simplicity of the equipment and servicing, and the absence of heat-exchange equipment.

From the mid-80s onwards, separation using membranes has displaced traditional methods for dividing gases, such as the cryogenic method for division and absorption function under pressure. At the moment, the membrane technology has become the most widespread in the following sectors of the industry:
· separation of hydrogen in chemical procedures of oil and refining of oil;
· elimination of carbon dioxide from natural gas;
· separation of air to yield highly enriched nitrogen, and enriched before the 40% flow of oxygen in whole air.

One of the most important applications of membranes of polymers is the separation and refining of hydrogen from combustible gases produced by oil refineries. This is explained by the main very high cost of producing hydrogen in installations with just one aim, and the possibility of using any other source to obtain hydrogen is very interesting for specialists.

The main sources of residual gases that contain hydrogen from the chemistry of oil are:
· purging of synthesis gas from ammonia;
· purging the gases in the production of methanol, styrene and others;
· the residual gas from cracking by vapour;
· the residual gas from the hydrodealkylation of toluene.

The sources of residual gases in the processes of oil refining are:
· residual gas from catalytic reforming;
· residual gas from catalytic cracking;
· exhaust gas from hydro-desulphuration;
· exhaust gas from hydrocracking.

However, it is necessary to observe that the use of polymer membranes was used normally by the media with heavy hydrocarbon contents less than 3-4% by volume, when the contents were greater, a reversible plasticising effect was observed with loss of the selective characteristics, but without mechanical destruction. Investigations of the inventors have demonstrated that when the concentrations of heavy hydrocarbons are reduced to below 2-3% by volume, selective characteristic is gradually restored (but not to more than 80% of the initial value).

The majority have chosen the method of membranes to eliminate carbon dioxide from natural gas. The membrane technology allows, in a similar procedure of a single stage, a reduction in the concentration of CO₂ from 5-7% by volume to 1.0-1.5% by volume. They were carried out first with a membrane based on cellulose acetate from "Separex Corporation" [Schell W. J. and co-workers, J. Chem. Eng. Progress. 1982, v. 78, no. 10, pp. 33-37], and also polysulphone from the company "Monsanto" [Monsanto Company], Prism Separators by Monsanto. For a variety of different sources of natural gas (Russia, Canada, SAR), these membranes need a significant modernisation in the sense that in the natural gas from these countries there is a high content of up to 40% of hydrogen sulphide. The investigations of the inventors under laboratory and industrial conditions have shown that the polymeric membrane of cellulose acetate, in the media with hydrogen sulphide contents of 5-7% by volume, rapidly becomes plasticised and loses the basic characteristics.

### OBJECT OF THE INVENTION

The main characteristics that define the capacity for commercialising the membrane are as follows:
· Selectivity of the membrane for the separation of the main components. For an efficient commercial use for separation of natural gas and/or gas that contains hydrogen, a membrane should have a selectivity for the H₂-CH₄ pair of not less than 50, and for the CO₂-CH₁ pair of not less than 30. Lower values of selectivity lead to the use of multi-stage schemes for the object component, which require additional compression, thus increasing the energy demands and leading to useless losses of gas.
· Specific productivity. The specific productivity of a membrane is defined by its type and structure, as well as by the design of the membrane separator (as equipment). In as far as the procedures for membrane separation are based on the differences in solubility of the gases in the polymer and the diffusion of gases through it, the capital expenditure for the installation of the membrane is defined by the thickness of the selective barrier formed by the membrane. On the other hand, the membrane should be able to withstand a significant pressure on its walls (below 5-7 Mpa). Thus, the most widely used types of polymer membrane that are employed commercially are of asymmetric type and of compound material.
· Geometry of the membrane. This parameter is defined in the stage of creating the membrane separator. Three main types of design are known for the membrane elements (bundle): a) flat-sheet fibre, b) spiral form and c) hollow. For the first two, the flat sheet membrane is used in the form of laminas stuck together or with revolutions in the form of a spiral, as required. The third type of design comprises fixing a membrane fibre in a sheaf, later fixed in a membrane device. The fibre-type is the one with best prospects.

### Chemical stability to the components of the mixture to be separated.

Bearing in mind the requirements described above, the polymers with greatest prospects for creating membranes are polysulphone, polyethersulphone, polymers that contain fluorine, polyamidoimide.

The isotopic membrane of hollow fibre, produced from poly-4-methylpentene-1, is well known (commercial name in Russia is "Graviton"), which is used in Russia in membrane installations for separating gaseous mixtures, including components of natural gas [*Kostrov Yu. A. and co-workers, Scientific Journal "Chemical Fibers", 1986, No. 6, pp. 49-51*].

The disadvantages of the aforementioned membrane can be attributed to the following characteristics:
· isotropic structures, and as a result, with low specific productivity;
· low selectivity;
· low selective properties after working with mixtures in which the concentration of heavy hydrocarbons (C₁ and heavy) is greater than 8% by volume.

The hollow fibre membrane made from composite material from polypropylene is well known, with a selective layer made from polyethersulphone [*EP MC14 B 01D 13*/*04, B 01D 53*/*22, No. 0 174 918, 1985*].

The disadvantages of the membranes made from composite materials can be attributed to the following characteristics:
· technological complexity involved in applying a homogeneous selective layer to the polypropylene support;
· possibility of the distraction of the selective layer, including its extraction.

The immediate technical solution to this problem is an asymmetric hollow fibre of polyethersulphone, produced from a hollow fibre of initial gas separation with an initial selectivity for the H₂/CH₄ pair < 5 by means of modification in a solution of HBr/n-C₅ 0.02 M with a posterior treatment under vacuum of up to 24 hours [*US patent, NC1 55*/*16, No. 4 472 175, 1984*].

The disadvantages of this solution that can be mentioned are as follows:
· loss of a selectivity reached after modification during a period of operation (the selectivity of the hydrogen/methane pair is constantly reduced: after 1 day of operation the selectivity is 147, after 6 days - 35 and so on);
· short usage times for modification of the liquid solution;
· need to keep the membrane treated under vacuum in order to achieve the selective properties required up to 24 hours.

### DESCRIPTION OF THE INVENTION

The technical results of the technical solution, created by the authors of the present invention for the production of an asymmetric hollow fibre membrane from polyethersulphone are as follows:
· good selective properties which remain stable over the period of usage;
· selectivity required for the procedures of separation of hydrogen and/or components of natural gas with a high content of H₂S (up to 40% by volume) and heavy hydrocarbons (up to 15% by volume).

The technical result is achieved because the polymer membrane for separation of gas for dividing the components of natural gas has a special construction:
· firstly the asymmetric hollow fibre membrane made from polyethersulphone is treated for the pervaporation with mixtures of liquids such as C₂H₅OH + X, in which X = toluene, acetone, dimethylformamide, with a concentration of X = 7-12% by volume;
· then the membrane is treated with a solution of 2.5% by volume of urethanosiloxane in isoamylic alcohol;
· it is then treated with a gaseous mixture of F₂- HF - inert gas; the content of the inert gas varies from 0 to 90%, and the concentration of HF in the current of F₂ is equal to 4-6% by volume.

The polymer membrane is produced by the following procedure: an initial hollow fibre of polyethersulphone is treated with the mixtures of organic liquids (C₂H₅OH-toluene, C₂H₅OH-acetone or C₂H₅OH-dimethylforamidae with a content of organic solvents of C₂H₅OH equal to 7-12% by volume in a period of 60-90 minutes with a near vacuum pump at a temperature of T = 298 K for 15 minutes.

The dry hollow fibre is treated with solution at 2.5% by volume of urethanosiloxane (for example, siloethane) in isopropanol.

Then the hollow fibres are modified in gaseous phase with a mixture of F₂:HF:N₂ (He).

The content of inert components varies from 0 to 90% by volume, the content of HF in F₂ is 4-6% by volume. In table No. 1 the real separation factors are shown form the pairs H₂/CH₄ and CO₂/CH₄ for the hollow fibre membrane, produced in the aforementioned procedure.

**Table I**

| Characteristics of separation of the polymer membrane of hollow fibre produced | | | | |
|---|---|---|---|---|
| No. | Treatment of organic solutions | Modification in gas phase | Separation factor | |
| | | | H₂/CH₄ | CO₂/CH₄ |
| 1 | | with no modification | 1.8 | 7 |
| 2 | solution 8% of toluene in C₂H₅OH | with no modification | 71 | 41 |
| 3 | solution 8% of toluene in C₂H₅OH | (F₂+HF) :N₂=20: 80% vol | 84 | 47 |
| 4 | solution 8% of toluene in C₂H₅OH | (F₂+HF) :N₂=40: 60% vol | 79 | - |
| 5 | solution 10% of toluene in C₂H₅OH | with no modification | 69 | 35 |
| 6 | solution 10% of toluene in C₂H₅OH | (F₂+HF) :N₂=20: 80% vol | 79 | 41 |
| 7 | solution 12% of toluene in C₂H₅OH | with no modification | 67 | 35 |
| 8 | solution 12% of toluene in C₂H₅OH | (F₂+HF) :N₂=20: 80% vol | 79 | 40 |
| 9 | solution 12% of toluene in C₂H₅OH | (F₂+HF) :N₂=40: 60% vol | 73 | 37 |
| 10 | solution 11% of acetone in C₂H₅OH | with no modification | 92 | 45 |
| 11 | solution 11% of acetone in C₂H₅OH | (F₂+HF) :N₂=20: 80% vol | 97 | 53 |
| 12 | solution 11% of acetone in C₂H₅OH | (F₂+HF) :N₂=10: 90% vol | 103 | 56 |
| 13 | solution 11% of acetone in C₂H₅OH | (F₂+HF) :N₂ =40: 60% vol | 96 | - |
| 14 | solution 11% of acetone in C₂H₅OH | F₂+HF=100% vol | 94 | 50 |
| 15 | solution 7% of acetone in C₂H₅OH | With no modification | 84 | 43 |
| 16 | solution 7% of acetone in C₂H₅OH | (F₂+HF) :N₂=20 : 80% vol | 93 | 47 |
| 17 | solution 7% of acetone in C₂H₅OH | (F₂+HF) :N₂=10: 90% vol | 97 | 50 |
| 18 | solution 7% of acetone in C₂H₅OH | F₂+HF=100% vol | 88 | 44 |
| 19 | solution 9% of dimethylformamide in C₂H₅OH | Not treated | 58 | 34 |
| 20 | solution 9% of dimethylformamide in C₂H₅OH | (F₂+HF) :N₂=20: 80% vol | 71 | 44 |
| 21 | solution 9% of dimethylforamide in C₂H₅OH | (F₂+HF) :N₂=10: 90% vol | 67 | 41 |

The results obtained show that the samples of the membrane treated with mixtures of organic liquids which are then treated with urethanosiloxane and/or modifiers with gaseous mixtures that contain fluorine, allow selective characteristics to be obtained. These are better than the selective properties of the initial polyethersulphone.

The gas phase modification can be carried out over a broad range of concentrations of fluorine and treatment times. The results attained are stable for a long time.

The samples of membrane, treated with fluorine, conserve the selective properties in a medium with a high concentration of H₂S and heavy hydrocarbons. The assumed properties of the membrane produced depend on the properties of separation of the initial membrane, the content of the mixture of liquids and the conditions of modification (concentration of fluorine, pressure of the modified mixture of gas, treatment time).

### EXAMPLES FOR A PREFERRED EMBODIMENT OF THE INVENTION

### Example 1

An asymmetric hollow fibre of polyethersulphone is treated by pervaporation in an 8% solution (by volume) of toluene in C₂H₅OH for 65 minutes, then dried under vacuum for 15 minutes and then treated in 2.5% (by volume) solution of urethanosiloxane with isopropanol for 60 seconds. The hollow fibre is dried in air for 12 hours in order to attain the stable separation factor for the pair H₂/CH₄ = 71, CO₂/CH₄ = 41.

### Example 2

An asymmetric hollow fibre of polyethersulphone is treated by pervaporation in an 11% solution (by volume) of acetone in C₂H₅OH for 75 minutes, then dried under vacuum for 15 minutes and then treated at 2.5% (by volume) of urethanosiloxane with isopropanol for 60 seconds. The hollow fibre is dried in air for 12 hours. After drying, the hollow fibre membrane is modified with a gaseous mixture (F₂+HF):N₂ = 10:90 (by volume) for 60 minutes. This results in an additional increase in the separation factor from 92 to 103 for the H₂/CH₄ pair, and from 45 to 56 for the CO₂/CH₄ pair. The membrane produced in this procedure maintained its properties when used in the medium H₂S:CH₄ = 40:60 pressure of 0.3 MPa) for 240 hours.

### Example 3

An asymmetric hollow fibre of polyethersulphone is treated by pervaporation in a 9% solution (by volume) of dimethylformamide in C₂H₅OH for 85 minutes, then dried under vacuum for 15 minutes and then treated in 2.5% (by volume) solution of urethanosiloxane with isopropanol for 60 seconds. The hollow fibre is dried in air for 12 hours. After drying, the hollow fibre membrane is modified with a gaseous mixture (F₂+HF) :N₂ = 20:80 (by volume) for 120 minutes. This results in an additional increase in the separation factor from 58 to 71 for the H₂/CH₄ pair, and from 34 to 44 for the CO₂/CH₄ pair. The membrane produced in this procedure maintained its properties when used in the medium CH₄ = (C₃H₈ + C₄H₁₀ + C₅H₁₂) = 85:15 (pressure of 0.1 MPa) for 240 hours.

### Example 4

An asymmetric hollow fibre of polyethersulphone is treated by pervaporation in a 12% solution (by volume) of toluene in C₂H₅OH for 60 minutes, then dried under vacuum for 15 minutes and then treated in 2.5% (by volume) solution of urethanosiloxane with isopropanol for 60 seconds. The hollow fibre is dried in air for 12 hours. After drying, the hollow fibre membrane is modified with a gaseous mixture (F₂+HF):N₂ = 20:80 (by volume) for 45 minutes. This results in an additional increase in the factor of separation from 67 to 79 for the H₂/CH₄ pair and from 35 to 40 for the CO₂/CH₄ pair. The membrane produced in this procedure kept its properties when used in the medium H₂S:CH₄=40:60 pressure 0.3 MPa) for 240 hours.

### Example 5

An asymmetric hollow fibre of polyethersulphone is treated by pervaporation in a 7% solution (by volume) of acetone in C₂H₅OH for 90 minutes, then dried under vacuum for 15 minutes and then treated in 2.5% (by volume) solution of urethanosiloxane with isopropanol for 60 seconds. The hollow fibre is dried in air for 12 hours. After drying, the hollow fibre membrane is modified with a gaseous mixture (F₂+HF):N₂ = 10:90 (by volume) for 60 minutes. This results in an additional increase in the separation factor from 84 to 97 for the H₂/CH₄ pair and from 43 to 50 for the CO₂/CH₄ pair. The membrane produced in this procedure maintained its properties when used in the medium CH₄:(C₃H₈ + C₄H₁₀ + C₅H₁₂) = 85:15 (pressure 0.1 MPa) for 240 hours.

### Use of the invention allows:

* the process of separation to be performed for gaseous mixtures that contain H₂ or components of natural gas, with greater efficiency than the membranes produced up until now;
* separation of mixtures with high content of H₂S (up to 40% by volume) and heavy hydrocarbons (up to 15% by volume);
* changing the conditions of modification and/or treatment to produce membranes with different properties required over the base of a single type of initial membrane - hollow fibre membrane of polyethersulphone for pervaporation;
* increasing the sphere of use for the pervaporation membrane;
* using a modification of fluorine in gas phase in all the stages of the creation of the membrane separator: as a membrane, as a bundle (element of the membrane) or separator of prepared membrane.

## Claims

1. A polymer membrane for the separation of components of natural gas, that comprises an asymmetric hollow fibre of polyethersulphone for the purposes of pervaporation, treated with mixtures of liquids (C2H5OH + X), in which X = toluene, acetone, dimethylformamide, with a content of X=7-12% (by volume) in the mixture, subsequently treated with a solution at 2.5% (by volume) of urethanosiloxane in isopropylic alcohol.

2. A polymer membrane, according to claim 1, **characterised in that** a hollow fibre membrane of polyethersulphone is used, modified with a gaseous mixture [(F₂ - HF) : inert gas] with content of (F₂ - HF) in the range 0-90% (by volume), and concentration of HF in fluorine of 4-6% (by volume).
